(19) Europäisches Patentamt
European Patent Office
Office européen des brevets

(11) EP 2 246 388 A1

(12) EUROPEAN PATENT APPLICATION

(43) Date of publication:
**03.11.2010 Bulletin 2010/44**

(21) Application number: **10160883.4**

(22) Date of filing: **23.04.2010**

(51) Int Cl.:
***C08K 5/00*** *(2006.01)* ***C08L 23/12*** *(2006.01)*
*C08K 5/1575* *(2006.01)* *C08K 5/3435* *(2006.01)*
*C08K 5/3492* *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **27.04.2009 JP 2009108102**

(71) Applicant: **Sumitomo Chemical Company, Limited**
**Tokyo 104-8260 (JP)**

(72) Inventors:
- **Kimura, Kenji**
**Chiba Chiba (JP)**
- **Kitamura, Kazuhiro**
**Osaka Osaka (JP)**

(74) Representative: **Vossius & Partner**
**Siebertstrasse 4**
**81675 München (DE)**

(54) **Granular stabilizer formulation and production method thereof**

(57) A granular stabilizer formulation comprising 1 to 95% by weight of (A) 3,9-bis[2-[3-(3-t-butyl-4-hydroxy-5-methylphenyl)propionyloxy]-1,1-dimethylethyl]-2,4,8,10-tetraoxaspiro[5.5]undecane and 99 to 5% by weight of (B) a compound having a hindered amine skeleton of the formula (1):

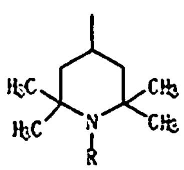

(1)

wherein, R represents a hydrogen atom or methyl group, and a method for preparing thermoplastic polymer compositions comprising 0.01 to 2 parts by weight of the granular stabilizer formulation per 100 parts by weight of thermoplastic polymer.

EP 2 246 388 A1

## Description

### Technical Field

The present invention relates to a granular formulation, and a production method thereof, and the like.

### Background Art

Compounds having a hindered amine skeleton are known as a hindered amine light stabilizer (HALS), and patent document 1 discloses that, of these compounds, a hindered piperidine compound can be blended, together with a phenol compound, sulfur compound, phosphorus compound and the like, into a thermoplastic polymer such as polyethylene, polypropylene and the like using a Henschel mixer, thereby imparting stability against light and heat in use of the thermoplastic polymer material.

Patent document 1: JP-A No. 5-1180

### Summary of the Invention

However, hindered amine light stabilizers are in the form of a powder at ambient temperature, and have a problem of occurrence of dusting in handling thereof, thus, a dust prevention countermeasure is necessary in blending into a thermoplastic polymer.

There is required a stabilizer imparting stability against light and heat to a thermoplastic polymer, without causing a problem of dusting.

That is, the present invention provides the following [1] to [8].

[1]. A granular formulation comprising 1 to 95% by weight of (A) 3,9-bis[2-[3-(3-t-butyl-4-hydroxy-5-methylphenyl) propionyloxy]-1,1-dimethylethyl]-2,4,8,10-tetraoxaspiro[5.5]undecane and 99 to 5% by weight of (B) a compound having a hindered amine skeleton of the formula (1):

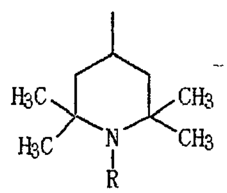

(1)

wherein, R represents a hydrogen atom or methyl group.

[2]. A granular formulation comprising 1 to 95% by weight of (A) 3,9-bis[2-[3-(3-t-butyl-4-hydroxy-5-methylphenyl) propionyloxy]-1,1-dimethylethyl]-2,4,8,10-tetraoxaspiro[5·5]undecane, 50 to 5% by weight of (B) a compound having a hindered amine skeleton of the formula (1):

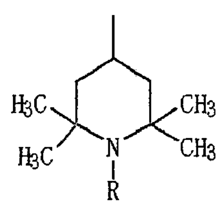

(1)

wherein, R represents a hydrogen atom or methyl group, and (C) at least one additive selected from the group consisting of a phosphorus-based antioxidant, ultraviolet absorber, neutralizing agent, lubricant, anti-blocking agent, antistatic agent, pigment, nucleating agent and flame retardant, wherein the total amount of (A), (B) and (C) is 100% by weight.

[3]. The granular formulation according to [2], wherein the additive (C) has a melting point which is higher than that of the compound (B) having a hindered amine skeleton.

[4]. The granular formulation according to any one of [1] to [3], wherein the granular formulation is a granular formulation containing substantially no sulfur-based antioxidant.

[5] A granular formulation production method comprising a first step of mixing (A) 3,9-bis[2-[3-(3-t-butyl-4-hydroxy-5-methylphenyl)propionyloxy]-1,1-dimethylethyl]-2,4,8,10-tetraoxaspiro[5.5]undecane and (B) a compound having a hindered amine skeleton of the formula (1):

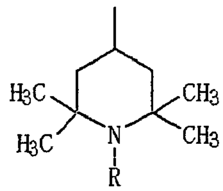
(1)

wherein, R represents a hydrogen atom or methyl group, and a second step of extrusion-granulating the mixture obtained in the first step.
[6] A granular formulation production method comprising a first step of mixing (A) 3,9-bis[2-[3-(3-t-butyl-4-hydroxy-5-methylphenyl)propionyloxy]-1,1-dimethylethyl]-2,4,8,10-tetraoxaspiro[5·5]undecane, (B) a compound having a hindered amine skeleton of the formula (1):

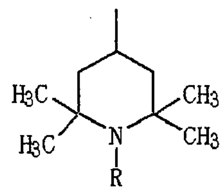
(1)

wherein, R represents a hydrogen atom or methyl group , and (C) at least one additive selected from the group consisting of a phosphorus-based antioxidant, ultraviolet absorber, neutralizing agent, lubricant, anti-blocking agent, antistatic agent, pigment, nucleating agent and flame retardant,
and a second step of extrusion-granulating the mixture obtained in the first step.
[7]. The production method according to [5] or [6], wherein the temperature in extrusion-granulation in the second step is defined by the inequality:

$$Tm-30\ (°C) < Tm < Tm+10\ (°C)$$

wherein, Tm represents the melting point (°C) of the compound (B) having a hindered amine skeleton.
[8]. A method of producing a thermoplastic polymer composition, comprising a step of blending 0.01 to 2 parts by weight of the granular formulation as described in any one of [1] to [4], per 100 parts by weight of the thermoplastic polymer.

Brief Explanation of Drawings

Fig. 1 is a schematic view of an extruder used in examples.
Fig. 2 is a schematic view of an injection molding machine used in examples.

Explanation of marks

Fig. 1

A: position of measurement of maximum temperature of mixture at adapter part
B: discharge pore
C: cylinder part

C-1 to C-4: temperature setting positions of heat mixing part
D: temperature setting position of dice part
E: screw part
H: hopper part

Fig. 2

(A) nozzle
(B-1) to (B-3): barrels 1 to 3
(C) hopper
(D) metal mold
(H) raw material charging part

Embodiments for Carrying Out the Invention

The granular formulation of the present invention contains 3,9-bis[2-[3-(3-t-butyl-4-hydroxy-5-methylphenyl) propionyloxy]-1,1-dimethylethyl]-2,4,8,10-tetraoxaspiro[5·5]undecane (A).

(A) is represented by the following formula.

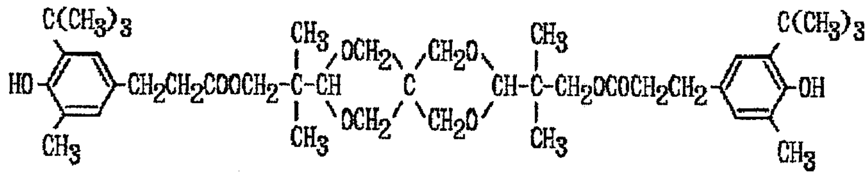

The above-described compound is known as a phenol antioxidant having a melting point of 111˚C, and marketed commercially under the name of Sumilizer (registered trademark) GA-80 (manufactured by Sumitomo Chemical Co., Ltd.).
The granular formulation of the present invention contains a compound (B) having a hindered amine skeleton of the formula (1):

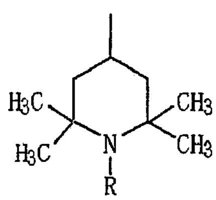
(1)

wherein, R represents a hydrogen atom or methyl group,
in addition to the above-described (A). Such a compound having a hindered amine skeleton is known as a hindered amine light stabilizer (HALS), and particularly, compounds having a melting point of preferably 70 to 220˚C, more preferably 70 to 180˚C and further preferably 70 to 130˚C are suitably used in the present invention. When the compound has a higher melting point, dispersibility in the case of addition of this compound into a thermoplastic polymer is poor in some cases, and when the compound has a lower melting point, granulation becomes difficult and a granulated material of good properties and conditions is not obtained in some cases.
Examples of the compound (B) having a hindered amine skeleton include bis(2,2,6,6-tetramethyl-4-piperidyl) sebacate (melting point: 81 to 85˚C), α-alkene (C20-C24) maleic anhydride 4-amino-2,2,6,6-tetramethylpiperidine oligomer (melting point: 95 to 125˚C), poly[(6-morpholino-s-triazine-2,4-diyl)[2,2,6,6-tetramethyl-4-piperidyl]imino]-hexamethylene[(2,2,6,6-tetramethyl-4-piperidyl)imino] (melting point: 110 to 130˚C), 8-acetyl-3-dodecyl-7,7,9,9-tetramethyl-1,3,8-triazospiro(4,5)decane-2,4-dione (melting point: 72 to 78˚C), polymer of bis(2,2,6,6-tetramethyl-4-piperidinyl)-succinate (melting point: 116 to 119˚C), and the like, and particularly suitable are bis(2,2,6,6-tetramethyl-4-piperidyl) sebacate, α-alkene (C20-C24) maleic anhydride 4-amino-2,2,6,6-tetramethylpiperidine oligomer, poly[(6-morpholino-s-triazine-2,4-diyl)[2,2,6,6-tetramethyl-4-piperidyl]imino]-hexamethylene[(2,2,6,6-tetramethyl-4-piperidyl)imino].

The granular formulation of the present invention can contain at least one additive (C) selected from the group consisting of a phosphorus-based antioxidant, ultraviolet absorber, neutralizing agent, lubricant, anti-blocking agent, antistatic agent, pigment, nucleating agent and flame retardant, in addition to the above-described (A) and the compound (B) having a hindered amine skeleton. Particularly, inorganic additives and organic additives having a melting point of 70˚C or more can be suitably used since these additives scarcely exert an influence on a granule property. It is preferable from the standpoint of stable granulation that the additive (C) has a melting point which is higher than that of the compound (B) having a hindered amine skeleton. On the other hand, additives other than the additive (C), for example, a sulfur-based antioxidant is contained in a proportion of preferably 1% by weight or less, more preferably 0.01% by weight or less with respect to the weight of the granular formulation, and it is further preferable that a sulfur-based antioxidant is not substantially contained. Examples of such a sulfur-based antioxidant include dilauryl-3,3'-thiodipropionate (melting point: 40 to 42˚C), dimyristyl-3,3'-thiodipropionate (melting point: 49 to 54˚C), distearyl-3,3'-thiodipropionate (melting point: 65 to 67˚C), pentaerythrityl tetrakis(3-dodecylthiopropionate) (melting point: about 46˚C), and the like.

As the above-described additive (C), the following compounds and the like are listed.

Examples of the phosphorus-based antioxidant include tris(2,4-di-t-butylphenyl) phosphite (melting point: 183 to 187˚C), tetrakis(2,4-di-t-butylphenyl)-4,4'-biphenylene diphosphonite (melting point: 75 to 90˚C), bis[2,4-di-t-butyl, (6-methyl) phenyl]ethyl phosphite (melting point: 89 to 92˚C), and the like.

Examples of the ultraviolet absorber include 2-hydroxy-4-n-octyloxy benzophenone (melting point: 45˚C or more), 2-(2H-benzotriazol-2-yl)-4,6-di-t-pentyl phenol (melting point: 77˚C or more), 2-[4,6-bis(2,4-dimethylphenyl)-1,3,5-triazin-2-yl]-5-(octyloxy)phenol (melting point: 87 to 89˚C), and the like.

Examples of the neutralizing agent include synthetic hydrotalcite, natural hydrotalcite, calcium hydroxide, and fatty acid metal salts such as calcium stearate, magnesium stearate, sodium stearate, potassium stearate, calcium laurate, magnesium laurate, sodium laurate, potassium laurate, calcium palmitate, magnesium palmitate, sodium palmitate, potassium palmitate, calcium myristate, magnesium myristate, sodium myristate, potassium myristate, and the like.

Examples of the lubricant include oleic amide (melting point: about 72 to 77˚C), erucic amide (melting point: 79 to 81˚C), propylene glycol monostearate (melting point: 42 to 48˚C), stearyl stearate (melting point: 53 to 59˚C), sorbitan stearate (melting point: 52 to 58˚C), and the like.

Examples of the anti-blocking agent include inorganic or organic anti-blocking agents such as aluminum silicate, synthetic silica, natural silica, zeolite, kaolin, diatomaceous earth and the like; etc.

Examples of the antistatic agent include glycerin monostearate (melting point: 65 to 70˚C), glycerin monocaprate (melting point: 46˚C), glycerin monolaurate (melting point: 57˚C), citric acid fatty acid monoglyceride (melting point: 59˚C), and the like.

Examples of the pigment include carbon black, titanium oxide, phthalocyanine pigment, quinacridone pigment, isoindolinone pigment, perylene or perynine pigment, quinophthalone pigment, diketo pyrrolo-pyrrole pigment, dioxazine pigment, disazo condensed pigment, benzimidazolone pigment, and the like.

Examples of the nucleating agent include a Na salt of $\alpha$-naphthalenesulfonic acid, Mg salt of $\alpha$- naphthalenesulfonic acid, Ca salt of $\alpha$-naphthalenesulfonic acid, Al salt of $\alpha$-naphthalenesulfonic acid, Na salt of 8-aminonaphthalenesulfonic acid, Na salt of benzenesulfonic acid, Mg salt of benzenesulfonic acid, Ca salt of benzenesulfonic acid, Al salt of benzenesulfonic acid, Ca salt of 2,5-dichlorobenzenesulfonic acid, Mg salt of 2,5-dichlorobenzenesulfonic acid, Ca salt of m-xylenesulfonic acid, Mg salt of m-xylenesulfonic acid, benzoic acid (melting point: 122˚C), p-isopropylbenzoic acid, o-t-butylbenzoic acid, p-t-butylbenzoic acid, monophenylacetic acid (melting point: 77˚C), diphenylacetic acid, Li salt of diphenylacetic acid, Na salt of diphenylacetic acid, Mg salt of diphenylacetic acid, Ca salt of diphenylacetic acid, Ba salt of diphenylacetic acid, Al salt of diphenylacetic acid, phenyldimethylacetic acid, Li salt of phenyldimethylacetic acid, Na salt of phenyldimethylacetic acid, Mg salt of phenyldimethylacetic acid, Ca salt of phenyldimethylacetic acid, Ba salt of phenyldimethylacetic acid, Mg salt of phthalic acid, succinic acid (melting point: 185˚C), Li salt of succinic acid, Na salt of succinic acid, Mg salt of succinic acid, Ca salt of succinic acid, Ba salt of succinic acid, glutaric acid (melting point: 95 to 99˚C), Li salt of glutaric acid, Na salt of glutaric acid, Mg salt of glutaric acid, Ca salt of glutaric acid, Ba salt of glutaric acid, adipic acid (melting point: 151 to 153˚C), suberic acid, Li salt of suberic acid, Na salt of suberic acid, Mg salt of suberic acid, Ca salt of suberic acid, Ba salt of suberic acid, sebacic acid, Li salt of sebacic acid, Na salt of sebacic acid, Mg salt of sebacic acid, Ca salt of sebacic acid, Al salt of sebacic acid, diphenylphosphinic acid (melting point: 193 to 196˚C), Li salt of diphenylphosphinic acid, Na salt of diphenylphosphinic acid, K salt of diphenylphosphinic acid, Ca salt of diphenylphosphinic acid, Mg salt of diphenylphosphinic acid, Al salt of diphenylphosphinic acid, Li salt of 4,4'-dichlorodiphenylphosphinic acid, Na salt of 4,4'-dimethyldiphenylphosphinic acid, dinaphthylphosphinic acid, Li salt of dinaphthylphosphinic acid, Na salt of dinaphthylphosphinic acid, Mg salt of dinaphthylphosphinic acid, Ca salt of dinaphthylphosphinic acid, Al salt of dinaphthylphosphinic acid, and the like.

Examples of the flame retardant include decabromobiphenyl, antimony trioxide, phosphorus-based flame retardant, aluminum hydroxide, and the like.

The granular formulation [1] of the present invention contains 1 to 95% by weight of the phenol antioxidant (A)

and 99 to 5% by weight of the compound (B) having a hindered amine skeleton, based on the weight of the granular formulation.

The granular formulation [2] of the present invention contains the above-described components: the phenol antioxidant (A) in an amount of 1 to 95% by weight, preferably 2 to 90% by weight and the compound (B) having a hindered amine skeleton in an amount of 50 to 5% by weight, preferably 50 to 10% by weight, more preferably 30 to 10% by weight, based on the weight of the granular formulation, and further, the additive (C), in which the total amount of (A) (B) (C) is 100% by weight. The content of the additive (C) is preferably 80 to 1% by weight, based on the weight of the granular formulation.

The additive (C) is preferably at least one additive selected from the group consisting of a phosphorus-based antioxidant, ultraviolet absorber, neutralizing agent, anti-blocking agent, pigment, nucleating agent and flame retardant. It is more preferable that at least one or more additives selected from a phosphorus-based antioxidant, ultraviolet absorber and neutralizing agent are contained as the additive (C).

The granular formulation of the present invention is excellent in shape preservation stability under a high temperature atmosphere. The granular formulation of the present invention is not easily colored, namely, excellent in an anti-coloring property. Further, a thermoplastic polymer can be endowed with stability against light and heat, by blending the granular formulation of the present invention. The stability of the thermoplastic polymer composition containing the granular formulation of the present invention is approximately equivalent to the stability of a thermoplastic polymer composition obtained by individually mixing the above-described components (A), (B) and (C) in the form of a powder, with a thermoplastic polymer.

Next, the production method of the granular formulation of the present invention will be explained.

Though the production method of the granular formulation of the present invention is not particularly restricted, there is suitably adopted a method in which the component (A), the compound (B) having a hindered amine skeleton, and if necessary, the additive (C), are mixed and the resultant mixture is granulated by an extruder, or the like. Mixing of the components may be sequential or simultaneous. The mixing method includes a method of dry blending using a mixing machine such as a Henschel mixer, or a method of performing melt kneading using a mixing machine such as a kneader, Bunbury, roll mill and extruder. For obtaining a more uniform mixture in the mixing, it is preferable that the components are previously dry-blended, and the resultant mixture is further melt-kneaded. Thus, it is preferable to adopt, as the production method of the granular formulation of the present invention, a method comprising a first step of mixing a mixture containing the phenol antioxidant (A), the compound (B) having a hindered amine skeleton of the above-described formula (1), and at least one additive (C) selected from the group consisting of a phosphorus-based antioxidant, ultraviolet absorber, neutralizing agent, lubricant, anti-blocking agent, antistatic agent, pigment, nucleating agent and flame retardant, and a second step of extrusion-granulating the mixture obtained in the first step.

It is preferable that the temperature in granulation by an extruder is a temperature near the melting point of the compound (B) having a hindered amine skeleton contained in the mixture. More specifically, it is preferable that the temperature in extrusion-granulation in the second step is defined by the inequality:

$$Tm-30\ (°C) \leq Tm < Tm+10\ (°C)$$

wherein, Tm represents the melting point (˚C) of the compound (B) having a hindered amine skeleton. As the method of setting the granulation temperature, exemplified are a method in which, in extruding a mixture in an extruder, the temperature is set by utilizing heat generation ascribable to shearing force, a method in which temperature is raised by passing a heat medium through a jacket of an extruder or the like, and methods combining these methods, and the like.

Examples of the extruder include dry extruders such as a disk pelletter and the like, and melt extruders such as a single screw extruder, a twin screw extruder or an extruder combining them (for example, single screw/twin screw extruder, and the like), etc.

Examples of the shape of thus obtained granular formulation include pellet, disk, sphere and the like, and it is preferable from the standpoint of mixability into a thermoplastic polymer that the granular formulation is in the form of a pellet preferably having a diameter of about 1 to 4 mm and a length of about 1 to 5 mm.

The granular formulation of the present invention is suitable as a stabilizer for a thermoplastic polymer having a tendency of undergoing deterioration due to heat or light.

Examples of the thermoplastic polymer include polypropylene resins such as an ethylene-propylene copolymer and the like; polyethylene resins (high density polyethylene (HD-PE), low density polyethylene (LD-PE), linear low density polyethylene (LLDPE) and the like), methylpentene polymer, ethylene-ethyl acrylate copolymer, ethylene-vinyl acetate copolymer, polystyrenes (polystyrene such as poly(p-methylstyrene), poly($\alpha$-methylstyrene) and the like, acrylonitrile-styrene copolymer, acrylonitrile-butadiene-styrene copolymer, special acrylic rubber-acrylonitrile-styrene copolymer, acrylonitrile-chlorinated polyethylene-styrene copolymer, styrene-butadiene copolymer and the like), chlorinated polyethylene, polychloroprene, chlorinated rubber, polyvinyl chloride, polyvinylidene chloride, methacrylic resin, ethylene-vinyl alcohol copolymer, fluorine resin, polyacetal, grafted polyphenylene ether resin, polyphenylene sulfide resin, polyurethane, polyamide, polyester resins (for example, polyethylene terephthalate, polybutylene terephthalate and the like), polycarbonate, polyacrylate, polysulfone, polyether ether ketone, polyether sulfone, aromatic polyester resin, diallyl phthalate prepolymer, silicone resin, 1,2-polybutadiene, polyisoprene, butadiene/acrylonitrile copolymer, ethylene-methyl methacrylate copolymer, and the like. Especially, from the standpoint of good molding processability, polyolefins such as polyethylene resins, polypropylene resins and the like and polystyrenes are preferable, and polypropylene resins are more preferable. Of them, polyolefins having a melt index (MI) in the range of about 0.01 to 100 are preferable. Further, thermoplastic polymers having a median diameter of about 0.1 to 10 mm are preferable.

Here, the polypropylene resin means a polyolefin containing a structural unit derived from propylene, and specifically mentioned are a crystalline propylene homopolymer, propylene-ethylene random copolymer, propylene-α-olefin random copolymer, propylene-ethylene-α-olefin copolymer; polypropylene block copolymer composed of a propylene homopolymer component or a copolymer component mainly composed of propylene, and a copolymer component of propylene and ethylene and/or α-olefin; and the like.

In the case of use of a polypropylene resin as the thermoplastic polymer to be stabilized in the present invention, one polypropylene resin may be used or two or more polypropylene resins may be blended and used.

As the α-olefin, α-olefins having 4 to 12 carbon atoms are mentioned, and examples thereof include 1-butene, 1-pentene, 1-hexene, 4-methyl-1-pentene, 1-octene, 1-decene and the like, preferably 1-butene, 1-hexene) and 1-octene.

Examples of the propylene-α-olefin random copolymer include a propylene-1-butene random copolymer, propylene-1-hexene random copolymer, propylene-1-octene random copolymer and the like.

Examples of the propylene-ethylene-a-olefin copolymer include a propylene-ethylene-1-butene copolymer, propylene-ethylene-1-hexene copolymer, propylene-ethylene-1-octene copolymer and the like.

In the polypropylene block copolymer composed of a propylene homopolymer component or a copolymer component mainly composed of propylene, and a copolymer component of propylene and ethylene and/or α-olefin, examples of the copolymer component mainly composed of propylene include a propylene-ethylene copolymer component, propylene-1-butene copolymer component, propylene-1-hexene copolymer component and the like. Examples of the copolymer component of propylene and ethylene and/or α-olefin include a propylene-ethylene copolymer component, propylene-ethylene-1-butene copolymer component, propylene-ethylene-1-hexene copolymer component, propylene-ethylene-1-octene copolymer component, propylene-1-butene copolymer component, propylene-1-hexene copolymer component, propylene-1-octene copolymer component and the like. The content of ethylene and/or α-olefin having 4 to 12 carbon atoms in the copolymer component of propylene and ethylene and/or α-olefin is usually 0.01 to 20 wt%.

Examples of the polypropylene block copolymer composed of a propylene homopolymer component or a copolymer component mainly composed of propylene, and a copolymer component of propylene and ethylene and/or α-olefin include a propylene-ethylene block copolymer, (propylene)-(propylene-ethylene) block copolymer, (propylene)-(propylene-ethylene-1-butene) block copolymer, (propylene)-(propylene-ethylene-1-hexene) block copolymer, (propylene)-(propylene-1-butene) block copolymer, (propylene)-(propylene-1-hexene) block copolymer, (propylene-ethylene)-(propylene-ethylene-1-butene) block copolymer, (propylene-ethylene)-(propylene-ethylene-1-hexene) block copolymer, (propylene-ethylene)-(propylene-1-butene) block copolymer, (propylene-ethylene)-(propylene-1-hexene) block copolymer, (propylene-1-butene)-(propylene-ethylene) block copolymer, (propylene-1-butene)-(propylene-ethylene-1-butene) block copolymer, (propylene-1-butene)-(propylene-ethylene-1-hexene) block copolymer, (propylene-1-butene)-(propylene-1-butene) block copolymer, (propylene-1-butene)-(propylene-1-hexene) block copolymer, and the like.

The granular formulation of the present invention is usually advantageously blended in an amount of 2 parts by weight or less with respect to 100 parts by weight of a thermoplastic polymer, and specifically, this amount is preferably 0.01 part by weight or more and 2 parts by weight or less, more preferably 0.01 part by weight or more and 1 part by weight or less. When 2 parts by weight or less, there is a preferable tendency of suppressing a bleed phenomenon in which a stabilizer comes out to the surface of a thermoplastic polymer composition.

## EXAMPLES

The present invention will be illustrated further in detail by examples and reference examples listed below, but the present invention is not limited to these examples.

Additives used in the examples and reference examples are shown in the following table.

| antioxidant | Chemical name | Melting point |
|---|---|---|
| P-1 | 3,9-bis[2-[3-(3-t-butyl-4-hydroxy-5-methylphenyl)propionyloxy]-1,1-dimethylethyl]-2,4,8,10-tetraoxaspiro[5·5]undecane | 110 to 120˚C |
| P-2 | tris(2,4-di-t-butylphenyl) phosphite | 183 to 187˚C |
| P-3 | dimyristyl-3,3-thiodipropionate | 49 to 54˚C (coagulation point) |
| P-4 | bis(2,2,6,6-tetramethyl-4-piperidyl) sebacate | 81 to 85˚C |
| P-5 | glycerol monostearate | 65 to 70˚C |
| P-6 | hydrotalcite | |
| P-7 | 2,4-di-t-butylphenyl-3,5-di-t-butyl-4-hydroxy benzoate | 192 to 197˚C |

Example 1 (Production of granular formulation for a thermoplastic polymer)

A compound (P-1) (500 g) and a compound (P-4) (500 g) were charged into a Henschel mixer, and stirred for 30 seconds at a revolution of a stirring blade of 950 rpm. The resultant mixture was charged into a hopper part of a twin screw extruder (manufactured by Nakatani Corporation, 30 mmφ) shown in Fig. 1, and the heater temperatures on a cylinder part were set at C1: 43˚C, C2: 56˚C, C3: 60˚C, C4: 62˚C, A: 75˚C, D: 73˚C, respectively, (respective positions are shown in Fig. 1), and extrusion was carried out at a screw revolution of 40 rpm. The resultant strand was cooled at room temperature, then, subjected to cutting to obtain 1000 g of a pellet-shaped granular formulation a (pellet diameter: 3.0 mm, pellet length: 1.0 to 5.0 mm). The temperature of the product in extrusion granulation was measured at part A of the cylinder, to find a value of 73˚C. A constant temperature constant humidity tank was prepared under conditions of a temperature of 50˚C and a humidity of 80% RH, supposing for example transportation in a ship and the like, as a high temperature atmosphere, and each 50 g of the resultant granular formulation was placed in a 200 ml beaker, and a 60 mmφ cylindrical iron weight was placed on this under a load of 2 kg and allowed to stand for 4 weeks, and apparent coloration or discoloration and existence of fixation between granular formulations (blocking) were visually confirmed. The weaker the fixation and coloration (discoloration) on the appearance of the sample, the more excellent the product. The results of measurement of shape preservation stability under these high temperature high humidity conditions are shown in Table 1.

Example 2

A pellet-shaped granular formulation b was obtained in the same manner as in Example 1 except that a mixture of a compound (P-1) (900 g) and a compound (P-4) (100 g) was charged and the temperature conditions were set at C1: 54˚C, C2: 71˚C, C3: 83˚C, C4: 80˚C, A: 80˚C, D: 80˚C, respectively, in Example 1. The temperature of the product in extrusion granulation was 85˚C. The results are shown in Table 1.

Example 3

A pellet-shaped granular formulation c was obtained in the same manner as in Example 1 except that a mixture of a compound (P-1) (770 g) and a compound (P-4) (230 g) was charged and the temperature conditions were set at C1: 42˚C, C2: 54˚C, C3: 65˚C, C4: 62˚C, A: 71˚C, D: 71˚C, respectively, in Example 1. The temperature of the product in extrusion granulation was 71˚C. The results are shown in Table 1.

Example 4

A pellet-shaped granular formulation d was obtained in the same manner as in Example 1 except that a mixture of a compound (P-1) (670 g) and a compound (P-4) (330 g) was charged and the temperature conditions were set at C1: 43˚C, C2: 55˚C, C3: 61˚C, C4: 62˚C, A: 75˚C, D: 75˚C, respectively, in Example 1. The temperature of the product in extrusion granulation was 73˚C. The results are shown in Table 1.

Example 5

A pellet-shaped granular formulation e was obtained in the same manner as in Example 1 except that a mixture of a compound (P-1) (20 g), compound (P-2) (200 g), compound (P-4) (200 g), compound (P-6) (200 g) and compound

(P-7) (380 g) was charged and the temperature conditions were set at C1: 69˚C, C2: 74˚C, C3: 79˚C, C4: 85˚C, A: 98˚C, D: 98˚C, respectively, in Example 1. The temperature of the product in extrusion granulation was 94˚C. The results are shown in Table 1.

Example 6

A pellet-shaped granular formulation f was obtained in the same manner as in Example 1 except that a mixture of a compound (P-1) (20 g), compound (P-2) (200 g), compound (P-4) (200 g), compound (P-5) (20 g), compound (P-6) (200 g) and compound (P-7) (360 g) was charged and the temperature conditions were set at C1: 45˚C, C2: 53˚C, C3: 65˚C, C4: 67˚C, A: 76˚C, D: 78˚C, respectively, in Example 1. The temperature of the product in extrusion granulation was 76˚C. The results are shown in Table 1.
The granular formulations a to f obtained in Example 1 to 6, respectively, do not cause a problem of dusting.
Table 1

| Shape preservation stability after 4 weeks under 50˚C and 80% RH of pellet-shaped granular formulation | | | | | | |
|---|---|---|---|---|---|---|
| | Example 1 | Example 2 | Example 3 | Example 4 | Example 5 | Example 6 |
| Granular formulation | a | b | c | d | e | f |
| Apparent coloration | No coloration | No coloration | No coloration | No coloration | No coloration | No coloration |
| stability | △ | ○ | ○ | △ | ○ | △ |

Judge of shape preservation stability
○: unstiffened under weak shaking
Δ: slight fixation, unstiffened under strong push
X: melting or severe fixation, no collapse under impact

Example 7 (Production of molded body i after addition of granular formulation a)

Into a hopper of an injection molding machine shown in Fig. 2 (manufactured by FANUC, 30 mmφ), a polypropylene resin (100 parts by weight) and the above-described granular formulation a (0.05 parts by weight) previously mixed by a Henschel mixer were charged. The heater temperatures were set at hopper (H): 50˚C, barrel 3 (B-3): 220˚C, barrel 2 (B-2): 230˚C, barrel 1 (B-1): 230˚C, nozzle (A): 230˚C, metal mold (D): 40˚C, respectively, (respective positions are shown in Fig. 2), and injection molding was carried out, to obtain a molded body i having a thickness of 1 mm. As a weather resistance test, exposure was performed up to 300 hours under conditions of 63˚C and no water spray using Xenon Weather-Ometer ci35A manufactured by ATLAS corporation, and the surface of the molded body was observed by a microscope, to recognize no existence of crack.

Example 8 (Production of molded body j after addition of granular formulation c)

Injection molding was carried out in the same manner as in Example 7 to obtain a molded body j, except that 0.05 parts by weight of the above-described granular formulation c was charged, in example 7. The weather resistance test was carried out in the same manner as in Example 7 to recognize no existence of crack, except that the molded body j was used and exposure was performed for 200 hours.

Example 9 (Production of molded body 1 after addition of granular formulation d)

Injection molding was carried out in the same manner as in Example 7 to obtain a molded body 1, except that 0.05 parts by weight of the above-described granular formulation d was charged, in example 7. The weather resistance test was carried out in the same manner as in Example 8 to recognize no existence of crack, except that the molded body 1 was used.

Example 10 (Production of molded body m after addition of granular formulation e)

Injection molding was carried out in the same manner as in Example 7 to obtain a molded body m, except that 0.05 parts by weight of the above-described granular formulation e was charged, in example 7. The weather resistance test was carried out in the same manner as in Example 7 to recognize no existence of crack, except that the molded body m was used.

Example 11 (Production of molded body n after addition of granular formulation f)

Injection molding was carried out in the same manner as in Example 7 to obtain a molded body n, except that 0.05 parts by weight of the above-described granular formulation f was charged, in example 7. The weather resistance test was carried out in the same manner as in Example 7 to recognize no existence of crack, except that the molded body n was used and exposure was performed up to 400 hours.

Example 12 (Production of molded body o after addition of granular formulation a)

Injection molding was carried out in the same manner as in Example 7 to obtain a molded body o, except that 0.20 parts by weight of the above-described granular formulation a was charged, in example 7. The weather resistance test was carried out in the same manner as in Example 7 to recognize no existence of crack, except that the molded body o was used and exposure was performed up to 700 hours.

Example 13 (Production of molded body p after addition of granular formulation d)

Injection molding was carried out in the same manner as in Example 7 to obtain a molded body p, except that 0.20 parts by weight of the above-described granular formulation d was charged, in example 7. The weather resistance test was carried out in the same manner as in Example 7 to recognize no existence of crack, except that the molded body p was used and exposure was performed up to 600 hours.

Example 14 (Production of molded body r after addition of granular formulation e)

Injection molding was carried out in the same manner as in Example 7 to obtain a molded body r, except that 0.20 parts by weight of the above-described granular formulation e was charged, in example 7. The weather resistance test was carried out in the same manner as in Example 7 to recognize no existence of crack, except that the molded body r was used and exposure was performed up to 700 hours.

Example 15 (Production of molded body s after addition of granular formulation f)

Injection molding was carried out in the same manner as in Example 7 to obtain a molded body s, except that 0.20 parts by weight of the above-described granular formulation f was charged, in example 7. The weather resistance test was carried out in the same manner as in Example 7 to recognize no existence of crack, except that the molded body s was used and exposure was performed up to 700 hours.

<u>Industrial Applicability</u>

(0057) The granular formulation of the present invention imparts stability against light and heat to a thermoplastic polymer, without causing a problem of dusting. Therefore, various articles obtained from a thermoplastic polymer into which the granular formulation of the present invention has been blended can be suitably used in applications requiring light resistance and heat resistance.

## Claims

**1.** A granular formulation comprising 1 to 95% by weight of (A) 3,9-bis[2-[3-(3-t-butyl-4-hydroxy-5-methylphenyl)propionyloxy]-1,1-dimethylethyl]-2,4,8,10-tetraoxaspiro[5·5]undecane and 99 to 5% by weight of (B) a compound having a hindered amine skeleton of the formula (1):

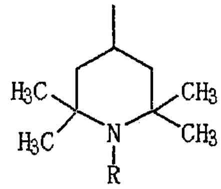

(1)

wherein, R represents a hydrogen atom or methyl group.

**2.** A granular formulation comprising 1 to 95% by weight of (A) 3,9-bis[2-[3-(3-t-butyl-4-hydroxy-5-methylphenyl)propionyloxy]-1,1-dimethylethyl]-2,4,8,10-tetraoxaspiro[5·5]undecane, 50 to 5% by weight of (B) a compound having a hindered amine skeleton of the formula (1):

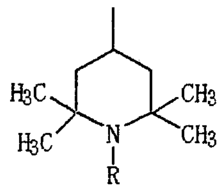

(1)

wherein, R represents a hydrogen atom or methyl group , and (C) at least one additive selected from the group consisting of a phosphorus-based antioxidant, ultraviolet absorber, neutralizing agent, lubricant, anti-blocking agent, antistatic agent, pigment, nucleating agent and flame retardant, wherein the total amount of (A), (B) and (C) is 100% by weight.

**3.** The granular formulation according to claim 2,
wherein the additive (C) has a melting point which is higher than that of the compound (B) having a hindered amine skeleton.

**4.** The granular formulation according to any one of claims 1 to 3, wherein the granular formulation is a granular formulation containing substantially no sulfur-based antioxidant.

**5.** A granular formulation production method comprising a first step of mixing (A) 3,9-bis[2-[3-(3-t-butyl-4-hydroxy-5-methylphenyl)propionyloxy]-1,1-dimethylethyl]-2,4,8,10-tetraoxaspiro[5·5]undecane and (B) a compound having a hindered amine skeleton of the formula (1):

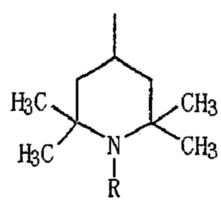

(1)

wherein, R represents a hydrogen atom or methyl group , and a second step of extrusion-granulating the mixture obtained in the first step.

**6.** A granular formulation production method comprising a first step of mixing (A) 3,9-bis[2-[3-(3-t-butyl-4-hydroxy-5-methylphenyl)propionyloxy]-1,1-dimethylethyl]-2,4,8,10-tetraoxaspiro[5·5]undecane, (B) a compound having a hindered amine skeleton of the formula (1):

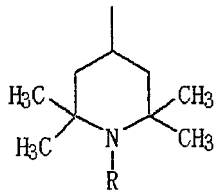

(1)

wherein, R represents a hydrogen atom or methyl group , and (C) at least one additive selected from the group consisting of a phosphorus-based antioxidant, ultraviolet absorber, neutralizing agent, lubricant, anti-blocking agent, antistatic agent, pigment, nucleating agent and flame retardant,
and a second step of extrusion-granulating the mixture obtained in the first step.

**7.** The production method according to claim 5 or 6,
wherein the temperature in extrusion-granulation in the second step is defined by the inequality:

$$Tm-30\ (°C) < Tm < Tm+10\ (°C)$$

wherein, Tm represents the melting point (˚C) of the compound (B) having a hindered amine skeleton.

**8.** A method of producing a thermoplastic polymer composition, comprising a step of blending 0.01 to 2 parts by weight of the granular formulation as described in any one of claims 1 to 4, per 100 parts by weight of the thermoplastic polymer.

Fig. 1

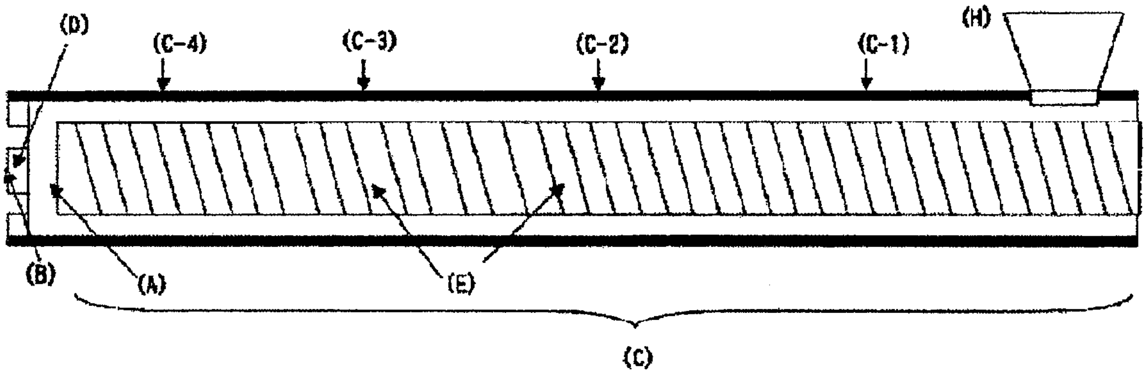


Fig. 2

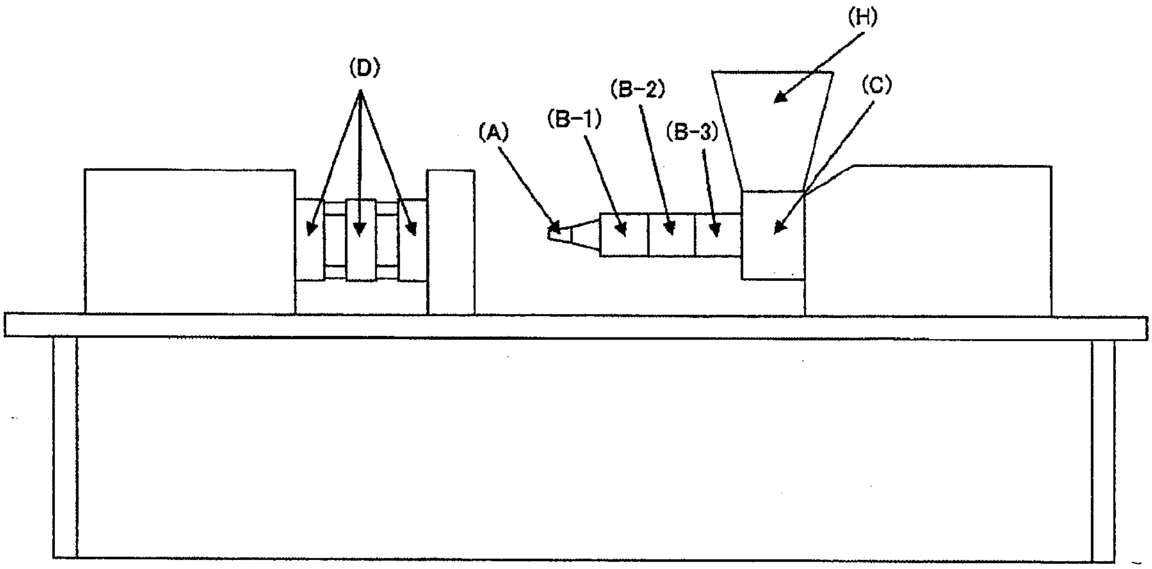

Europäisches Patentamt
European Patent Office
Office européen des brevets

# EUROPEAN SEARCH REPORT

Application Number
EP 10 16 0883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 454 378 A1 (SUMITOMO CHEMICAL CO [JP]) 30 October 1991 (1991-10-30)<br>* page 4, line 16 - line 21 *<br>* examples 1-5 *<br>* claims 7,8 *<br>----- | 1-8 | INV.<br>C08K5/00<br>C08L23/12<br><br>ADD.<br>C08K5/1575<br>C08K5/3435<br>C08K5/3492 |
| X<br><br>Y | US 6 824 936 B1 (ROSIEK THOMAS A [US] ET AL) 30 November 2004 (2004-11-30)<br>* column 15, line 24 - line 31 *<br>* examples 2-5,8,10,11,14,15; table 1 *<br>----- | 5,6<br><br>1-4,7,8 | |
| Y | EP 0 934 972 A2 (CLARIANT GMBH [DE]) 11 August 1999 (1999-08-11)<br>* page 17, line 7 - line 8 *<br>* claims 1,2 *<br>----- | 1-8 | |

TECHNICAL FIELDS SEARCHED (IPC)

C08K

1

The present search report has been drawn up for all claims

| Place of search | Date of completion of the search | Examiner |
|---|---|---|
| The Hague | 28 July 2010 | Rodríguez, Luis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 16 0883

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2010

| Patent document cited in search report | Publication date | Patent family member(s) | Publication date |
| --- | --- | --- | --- |
| EP 0454378 A1 | 30-10-1991 | CA 2039911 A1 | 26-10-1991 |
| | | DE 69120860 D1 | 22-08-1996 |
| | | DE 69120860 T2 | 23-01-1997 |
| | | JP 2803318 B2 | 24-09-1998 |
| | | JP 4007342 A | 10-01-1992 |
| US 6824936 B1 | 30-11-2004 | WO 2005017618 A1 | 24-02-2005 |
| EP 0934972 A2 | 11-08-1999 | DE 19804910 A1 | 12-08-1999 |
| | | ES 2221241 T3 | 16-12-2004 |
| | | JP 11279339 A | 12-10-1999 |
| | | TW 418230 B | 11-01-2001 |
| | | US 2002006992 A1 | 17-01-2002 |
| | | ZA 9900922 A | 10-08-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5001180 A